(19) Europäisches Patentamt
European Patent Office
Office européen des brevets

(11) **EP 4 749 798 A1**

(12) **EUROPEAN PATENT APPLICATION**

(43) Date of publication:
**27.05.2026 Bulletin 2026/22**

(21) Application number: **25216094.0**

(22) Date of filing: **14.11.2025**

(51) International Patent Classification (IPC):
***H01M 50/42*** *(2021.01)* ***H01M 50/443*** *(2021.01)*
***H01M 50/446*** *(2021.01)* ***H01M 50/449*** *(2021.01)*
***H01M 50/46*** *(2021.01)*

(52) Cooperative Patent Classification (CPC):
**H01M 50/449; H01M 50/42; H01M 50/443; H01M 50/446; H01M 50/46**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.11.2024 KR 20240163679**

(71) Applicant: **SAMSUNG SDI CO., LTD.**
**Yongin-si, Gyeonggi-do 17084 (KR)**

(72) Inventors:
- **LEE, Jae Yeon**
  **Suwon-si, Gyeonggi-do 16678 (KR)**
- **CHOI, Hyeon Seon**
  **Suwon-si, Gyeonggi-do 16678 (KR)**
- **LEE, Jung Ran**
  **Suwon-si, Gyeonggi-do 16678 (KR)**
- **LEE, Chan Kyu**
  **Suwon-si, Gyeonggi-do 16678 (KR)**

(74) Representative: **Michalski Hüttermann & Partner Patentanwälte mbB**
**Kaistraße 16A**
**40221 Düsseldorf (DE)**

# (54) SEPARATOR FOR RECHARGEABLE BATTERY AND RECHARGEABLE BATTERY INCLUDING THE SAME

(57) The present disclosure relates to a separator for a rechargeable battery, and a rechargeable battery including the separator. The separator includes a porous substrate and a coating layer located on at least one surface of the porous substrate. The coating layer includes a crosslinked product of a binder and a crosslinking agent, and a filler. The binder includes a (meth)acrylic binder including a first structural unit derived from (meth)acrylic acid, (meth)acrylate, or a salt thereof, a second structural unit derived from hydroxyalkyl (meth)acrylate, and a third structural unit derived from (meth)acrylamidosulfonic acid or a salt thereof. The crosslinking agent includes an aziridine-based crosslinking agent. The filler includes a mixture of a first filler and a second filler, the first filler is an inorganic filler, and the second filler is a fibrous filler.

FIG 1.

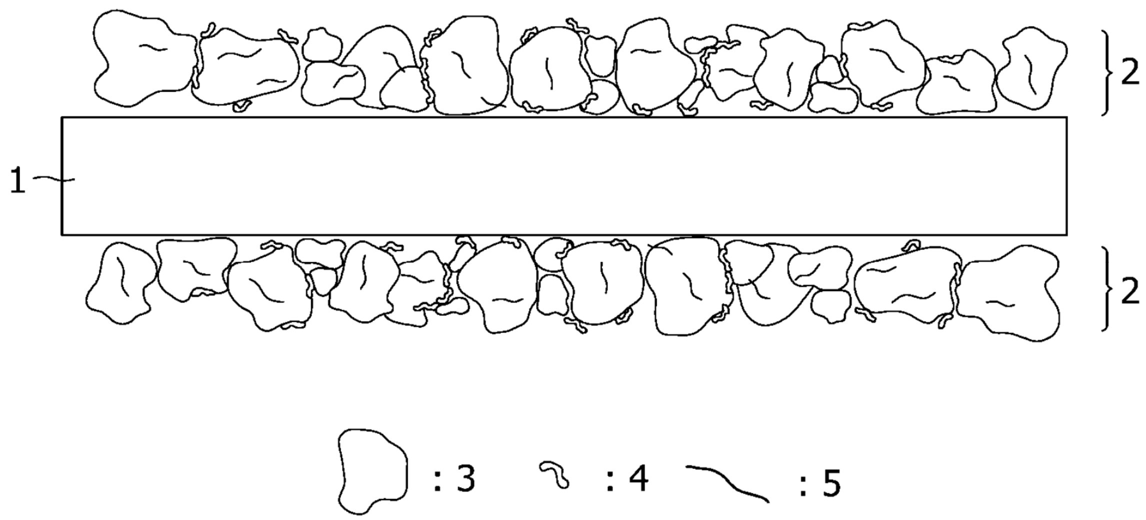


EP 4 749 798 A1

## Description

CROSS-REFERENCE TO RELATED APPLICATION

The present application claims priority to Korean Patent Application No.10-2024-0163679, filed on November 16, 2024 in the Korean Intellectual Property Office.

BACKGROUND

### 1. Field of the Disclosure

The present disclosure relates to a separator for a rechargeable battery, and a rechargeable battery including the separator.

### 2. Discussion of Related Art

With increasing presence of electronic devices such as, e.g., mobile phones, notebook computers, electric vehicles, and the like, using batteries, the demand for secondary batteries having high energy density and high capacity is increasing. Therefore, improving the performance of rechargeable lithium batteries may be advantageous.

A rechargeable lithium battery includes a positive electrode and a negative electrode that contain an active material capable of the intercalation and deintercalation of lithium ions and produces electric energy by oxidation and reduction reactions when the lithium ions are intercalated into and deintercalated from the positive electrode and the negative electrode.

The rechargeable lithium battery may include a separator between the positive electrode and the negative electrode. The separator is impregnated in an electrolyte solution.

SUMMARY

One example embodiment includes a separator for a rechargeable battery which provides a low thermal shrinkage rate, high rate characteristics during charging and discharging, low membrane resistance, and high substrate adhesion.

Another example embodiment includes a rechargeable battery including the separator for a rechargeable battery.

One example embodiment includes a separator for a rechargeable battery.

The separator for a rechargeable battery includes a porous substrate and a coating layer located on at least one surface of the porous substrate. The coating layer includes a crosslinked product of a binder and a crosslinking agent, and a filler, the binder includes a (meth)acrylic binder including a first structural unit derived from (meth)acrylic acid, (meth) acrylate, or a salt thereof, a second structural unit derived from hydroxyalkyl (meth)acrylate, and a third structural unit derived from (meth)acrylamidosulfonic acid or a salt thereof, the crosslinking agent includes an aziridine-based crosslinking agent, the filler includes a mixture of a first filler and a second filler, the first filler is an inorganic filler, and the second filler is a fibrous filler.

Another example embodiment includes a rechargeable battery.

The rechargeable battery includes a positive electrode, a negative electrode, and the above-described separator for a rechargeable battery located between the positive electrode and the negative electrode.

BRIEF DESCRIPTION OF THE DRAWINGS

The above and other objects, features and advantages of the present disclosure may become more apparent to those of ordinary skill in the art by describing example embodiments thereof in detail with reference to the accompanying drawings, in which:

FIG. 1 is a cross-sectional view showing a separator for a rechargeable lithium battery according to one example embodiment; and

FIG. 2 to FIG. 5 are cross-sectional views schematically showing rechargeable lithium batteries according to example embodiments.

DETAILED DESCRIPTION

Hereinafter, example embodiments of the present disclosure are described in detail. However, the embodiments are provided as examples, the present disclosure is not limited thereto, and the present disclosure is only defined by the scope of the claims to be described below.

Unless otherwise specified herein, when a part such as a layer, film, region, plate, and the like, is described as being "on" another part, it includes not only the case where the part is "directly on" the other part, but also the case where there is still another part therebetween.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

Here, the term "particle size D50" refers to the average particle size, which means the size of particles with a cumulative volume of 50% by volume in the particle size distribution. The particle size distribution may be measured by methods known to those skilled in the art. For example, the particle size distribution may be measured using a particle size analyzer, a transmission electron micrograph, or a scanning electron micrograph. In another method, an D50 value may be obtained by measuring the particle size using a measuring device using dynamic light scattering, performing data analysis to count the number of particles for each particle size range, and then calculating the particle size therefrom. Alternatively, D50 may be measured using a laser diffraction method. For example, when measuring by laser diffraction, after the particles to be measured are dispersed in a dispersion medium, the particles may be introduced into a commercially available laser diffraction particle size measuring device (e.g., Microtrac MT 3000) and irradiated with ultrasonic waves of ≥ 28 kHz at an output of 60 W, and the D50 based on 50% of the particle size distribution in the measurement device may be calculated.

When the particle is spherical, the size may mean a diameter.

In this specification, "(meth)acrylic" means acrylic and/or methacrylic.

Unless otherwise defined herein, "substitution" means that hydrogen in a compound is replaced by a substituent such as or including at least one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br or I), a hydroxyl group (-OH), a nitro group ($-NO_2$), a cyano group (-CN), an amino group (-NRR') (wherein, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (wherein, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$, a carbamoyl group ($-C(O)NH_2$), a thiol group (-SH), an acyl group (-C(=O)R, where R is hydrogen, a C1 to C6 alkyl group, a C1 to C6 alkoxy group, or a C6 to C12 aryl group), a carboxyl group (-COOH) or a salt thereof (-C(=O)OM, where M is an organic or inorganic cation), a sulfonic acid group ($-SO_3H$) or a salt thereof ($-SO_3M$, where M is an organic or inorganic cation), a phosphate group ($-PO_3H_2$) or a salt thereof ($-PO_3MH$ or $-PO_3M_2$, where M is an organic or inorganic cation), and combinations thereof.

Hereinafter, a C1 to C3 alkyl group means a methyl group, an ethyl group, or a propyl group. A C1 to C10 alkylene group may be or include, for example, a C1 to C6 alkylene group, a C1 to C5 alkylene group, or a C1 to C3 alkylene group, such as a methylene group, an ethylene group, or a propylene group. A C3 to C20 cycloalkylene group may be or include, for example, a C3 to C10 cycloalkylene group or a C5 to C10 cycloalkylene group, such as a cyclohexylene group. A C6 to C20 arylene group may be or include, for example, a C6 to C10 arylene group, such as a phenylene group. A C3 to C20 heterocyclic group may be or include, for example, a C3 to C10 heterocyclic group, such as a pyridine group.

Hereinafter, "hetero" means including one or more heteroatoms such as or including at least one of N, O, S, Si, and P.

In chemical formulas, the * symbol indicates a moiety that is connected to the same or different atoms, groups, or structural units. Unless otherwise specifically stated in the chemical formulas described herein, it may be assumed that hydrogen is bonded in the structure of the chemical formula.

Hereinafter, "alkali metal" refers to an element belonging to Group 1 of the periodic table, such as lithium, sodium, potassium, rubidium, cesium, or francium and may be present in a cationic or neutral state.

When describing a numerical range in this specification, 'X to Y' means 'X or more and Y or less (X ≤ and ≤ Y).'

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

Hereinafter, a separator for a rechargeable battery and a rechargeable battery including the separator of the present disclosure are described in detail.

Hereinafter, only rechargeable lithium batteries are described. However, the present disclosure may also be

applied to rechargeable batteries of different metal ions in addition to rechargeable lithium batteries.

According to one example embodiment, the separator for a rechargeable lithium battery includes a porous substrate and a coating layer located on at least one surface of the porous substrate. The coating layer includes a crosslinked product of a binder and a crosslinking agent, and a filler. The binder includes a (meth)acrylic binder including a first structural unit derived from (meth)acrylic acid, (meth)acrylate, or a salt thereof, a second structural unit derived from hydroxyalkyl (meth)acrylate, and a third structural unit derived from (meth)acrylamidosulfonic acid or a salt thereof. The crosslinking agent includes an aziridine-based crosslinking agent. The filler includes a mixture of a first filler and a second filler, the first filler is an inorganic filler, and the second filler is a fibrous filler.

According to one example embodiment, the crosslinked product may be or include a thermally crosslinked product.

According to one example embodiment, the coating layer may be formed of or include a composition for a coating layer including the (meth)acrylic binder, the aziridine-based crosslinking agent, and the filler.

According to one example embodiment, the inorganic filler may be or include a non-fibrous filler rather than a fibrous filler.

The separator can provide a low thermal shrinkage rate, high rate characteristics during charging and discharging, low membrane resistance, and high substrate adhesion.

In one example embodiment, the separator may have a dry thermal shrinkage rate of $\geq$ 5% or less in each of a machine direction (MD) and a transverse direction (TD), a wet thermal shrinkage rate of $\geq$ 5% or less in each of the MD and the TD, and a membrane resistance of $\geq$ 0.65 $\Omega$ or less. Here, the MD and TD are substantially the same direction as the MD and TD of the porous substrate, respectively.

In one example embodiment, the separator may have a substrate adhesion of $\geq$ 1.5 N or more.

A coating layer including only an inorganic filler among the fillers cannot provide high ionic conductivity and low membrane resistance characteristics. A coating layer including only a fibrous filler among the fillers may present a challenge in that heat resistance is not sufficiently secured.

A coating layer including only the filler, e.g., a mixture of the first filler and the second filler, cannot provide a separator having the above-described dry thermal shrinkage rate range and wet thermal shrinkage rate range. The separator having the coating layer including the filler and the crosslinked product of the (meth)acrylic binder and the aziridine-based crosslinking agent can have the above-described dry thermal shrinkage rate range, wet thermal shrinkage rate range and membrane resistance range.

A separator having a coating layer formed of or including a composition for a coating layer, which includes the (meth)acrylic binder but does not include an aziridine-based crosslinking agent as a crosslinking agent or contains a crosslinking agent other than the aziridine-based crosslinking agent, may have decreased battery reliability due to an increase in one or more of the above-described dry thermal shrinkage rate and/or wet thermal shrinkage rate. According to one example embodiment, the aziridine-based crosslinking agent may be included in an amount of $\geq$ 95 wt% or more, for example, in a range of $\geq$ 98 wt% to $\leq$ 100 wt%, or 100 wt%, of the total crosslinking agent in the composition for a coating layer.

A separator having a coating layer formed with a composition for a coating layer, which includes the aziridine-based crosslinking agent but does not include the (meth)acrylic binder or contains a binder other than the (meth)acrylic binder, may have a high thermal shrinkage rate, high membrane resistance, and high air permeability, which may present challenges with the capacity, lifespan, and safety of the battery. According to one example embodiment, the (meth)acrylic binder may be included in an amount of $\geq$ 95 wt% or more, for example, in a range of $\geq$ 98 wt% to $\leq$ 100 wt%, or 100 wt%, of the total binder in the composition.

The filler includes a mixture of the first filler and the second filler. A separator formed of or including a composition for a coating layer including only the first filler may have poor rate characteristics during charging and discharging of a battery. A separator formed of or including a composition for a coating layer including only the second filler may have poor battery reliability due to an increase in the dry thermal shrinkage rate and/or wet thermal shrinkage rate. According to one example embodiment, the mixture of the first filler and the second filler may be included in an amount of $\geq$ 95 wt% or more, for example, in a range of $\geq$ 98 wt% to $\leq$ 100 wt%, or 100 wt%, of the total filler in the composition.

## Coating layer

The binder includes a (meth)acrylic binder including a first structural unit derived from (meth)acrylic acid, (meth) acrylate, or a salt thereof, a second structural unit derived from hydroxyalkyl (meth)acrylate, and a third structural unit derived from (meth)acrylamidosulfonic acid or a salt thereof.

According to one example embodiment, the (meth)acrylic binder may be or include a non-adhesive binder.

According to one example embodiment, the (meth)acrylic binder may be or include a salt-based binder, for example, an alkali metal salt-based binder. Here, the alkali metal may be or include at least one of lithium, sodium, potassium, rubidium, or cesium. In this case, it may be possible to lower the membrane resistance of the separator.

The (meth)acrylic binder may fix the filler onto the porous substrate, enable the coating layer to adhere to the porous substrate and the electrode, and contribute to improving the heat resistance, air permeability, and oxidation resistance of the separator. In addition, the (meth)acrylic binder can facilitate the movement of lithium ions, thereby lowering membrane resistance and improving ion conductivity, increase the adhesion of the coating layer to the porous substrate and the electrode, and increase the dispersibility of the filler within the coating layer. In addition, the (meth)acrylic binder in the coating layer including the filler described below can provide a separator having low membrane resistance, a low dry thermal shrinkage rate, and a low wet thermal shrinkage rate.

The sum of the contents of the first structural unit, the second structural unit, and the third structural unit may be about 95 mol% or more, for example, in a range of ≥ 95 mol% to ≤ 100 mol%, for example, 100 mol%, based on 100 mol% of the (meth)acrylic binder. In the above range, the above-described separator effect may be readily implemented.

The first structural unit is derived from (meth)acrylic acid, (meth)acrylate, or a salt thereof, and may fix the filler onto the porous substrate while providing adhesion so that the coating layer may be attached to the porous substrate and the electrode, and may contribute to improving the heat resistance and air permeability of the separator. In addition, the first structural unit may improve the dispersibility of the coating layer composition by having a carboxyl functional group (-C(=O)O-) within the structural unit.

The first structural unit may be represented by any one of the following Chemical Formulas 1 to 3:

Chemical Formula 1:

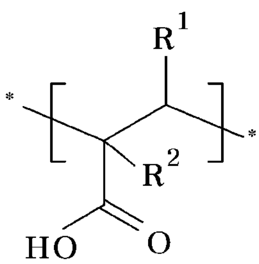

;

Chemical Formula 2:

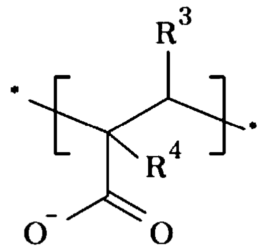

;

Chemical Formula 3:

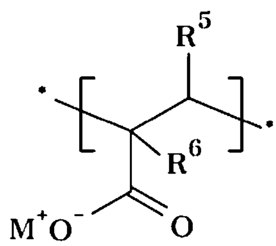

.

The first structural unit may be included in an amount in a range of ≥ 20 mol% to ≤ 75 mol%, for example, 20,21,22,23,24,25,26,27,28,29,30,31,32,33,34,35,36,37,38,39,40,41,42,43,44,45,46,47,48,49,50, 51,52,53,54,55,56,57,58,59,60,61,62,63,64,65,66,67,68,69,70,71,72,73,74,75 mol%, 25 mol% to 70 mol%, 30 mol% to 65 mol%, 30 mol% to 60 mol%, or 40 mol% to 65 mol%, based on 100 mol% of the binder for a rechargeable lithium battery. When the first structural unit is included in the above range, the separator may exhibit low membrane resistance, and desired or improved adhesion to the porous substrate and the electrode, heat resistance, air permeability, and oxidation resistance.

According to one example embodiment, the first structural unit may include the structural unit represented by Chemical Formula 2 and the structural unit represented by Chemical Formula 3, in which case the structural unit represented by Chemical Formula 2 and the structural unit represented by Chemical Formula 3 may be included in a molar ratio in a range of ≥ 10:1 to ≤ 1:2, about 10:1 to ≤ 1:1, or about 5:1 to ≤ 1:1.

According to another example embodiment, the first structural unit may include only the structural unit represented by Chemical Formula 2 or Chemical Formula 3.

The second structural unit is derived from hydroxyalkyl (meth)acrylate and may fix the filler onto the porous substrate while providing adhesion so that the coating layer may be attached to the porous substrate and the electrode. In addition, the second structural unit may improve the dispersibility of the coating layer composition by having a carboxyl functional group (-C(=O)O-) within the structural unit.

The second structural unit may be represented by the following Chemical Formula 4:

Chemical Formula 4:

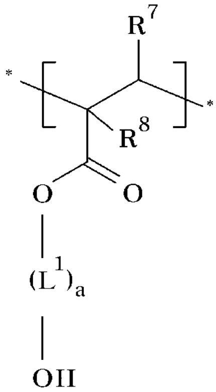

.

The second structural unit may be included in an amount in a range of ≥ 1 mol% to ≤ 20 mol%, for example 1,2,3,4,5,6,7,8,9,10,11,12,13,14,15,16,17,18,19,20 mol%, 2 mol% to 15 mol%, 5 mol% to 15 mol%, or 5 mol% to 10 mol%, based on 100 mol% of the binder for a rechargeable lithium battery. In the above range, it may be possible to increase the adhesiveness of the coating layer to the porous substrate and the electrode.

The second structural unit may be or include, for example, a structural unit derived from hydroxyalkyl (meth) acrylate. Here, the alkyl may be or include a C1 to C20 alkyl, a C1 to C10 alkyl, or a C1 to C6 alkyl.

The hydroxyalkyl (meth)acrylate may include, for example, one or more of hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth) acrylate, and 6-hydroxyhexyl (meth)acrylate.

The third structural unit derived from the (meth)acrylamidosulfonic acid or a salt thereof may lower the membrane resistance of the separator by increasing the possibility of lithium ion movement in the presence of the first structural unit and the second structural unit.

The third structural unit may enhance the heat resistance of the separator by including a bulky functional group derived from (meth)acrylamidosulfonic acid or a salt thereof, thereby increasing the glass transition temperature. When the third structural unit includes a functional group derived from a salt of (meth)acrylamidosulfonic acid, the metal (M) can move through the third structural unit by a sulfonic acid functional group substituted with the metal (M), thereby exhibiting an effect of lowering membrane resistance.

The third structural unit may be represented by Chemical Formula 5, Chemical Formula 6, Chemical Formula 7, or a combination thereof:

Chemical Formula 5:

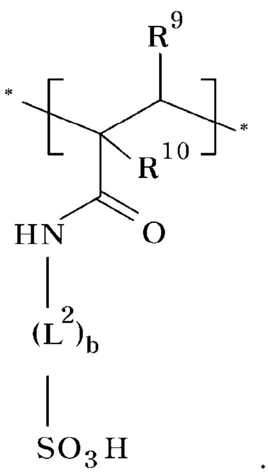

;

Chemical Formula 6:

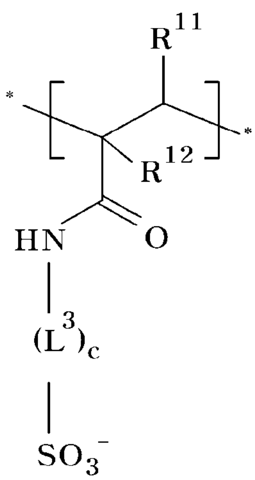

;

Chemical Formula 7:

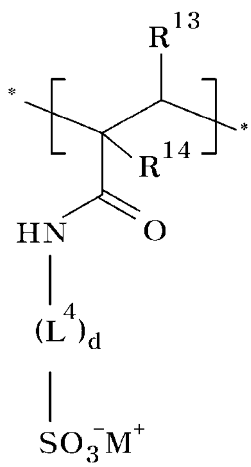

.

The third structural unit may include only one, or two or more types, of the structural unit represented by Chemical Formula 5, the structural unit represented by Chemical Formula 6, and the structural unit represented by Chemical

Formula 7. For example, the third structural unit may include the structural unit represented by Chemical Formula 6, and as another example, the third structural unit may include the structural unit represented by Chemical Formula 6 and the structural unit represented by Chemical Formula 7.

The third structural unit may be or include, for example, a structural unit derived from (meth)acrylamidoalkane sulfonic acid or a salt thereof. Here, the alkane may be or include a C1 to C20 alkane, a C1 to C10 alkane, or a C1 to C6 alkane, and the alkyl may be or include a C1 to C20 alkyl, a C1 to C10 alkyl, or a C1 to C6 alkyl. The salt means a salt composed of or including the above-described sulfonic acid and a desired ion. The ion may be or include, for example, an alkali metal ion, in which case the salt may be or include a sulfonic acid alkali metal salt.

For example, the (meth)acrylamidoalkane sulfonic acid may be 2-(meth)acrylamido-2-methylpropane sulfonic acid.

The third structural unit may be included in an amount in a range of ≥ 20 to ≤ 75 mol%, for example, 20,21,22,23,24,25,26,27,28,29,30,31,32,33,34,35,36,37,38,39,40,41,42,43,44,45,46,47,48,49,50, 51,52,53,54,55,56,57,58,59,60,61,62,63,64,65,66,67,68,69,70,71,72,73,74,75 mol%, 25 mol% to 70 mol%, 20 mol% to 65 mol%, 30 mol% to 65 mol%, or 30 mol% to 60 mol% in the (meth)acrylic binder. When the third structural unit is included in the above range, the (meth)acrylic binder and a separator including the same may exhibit significantly low membrane resistance.

The description of Chemical Formulas 1 to 7 is as follows.

$R^1$ to $R^{14}$ may each independently be or include hydrogen or a C1 to C10 alkyl group. For example, $R^1$ to $R^7$ and $R^9$ to $R^{14}$ may each be or include hydrogen or a methyl group; and $R^8$ may be or include a methyl group.

$L^1$ to $L^4$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^1$ may be or include a methylene group or an ethylene group, and $L^2$ to $L^4$ may each be independently $*\text{-}C(CH_3)_2\text{-}CH_2\text{-}*$.

a, b, c, and d may each be independently an integer in a range from 0 to 2. For example, a, b, c, and d may all be equal to 1.

M may be or include an alkali metal, and the alkali metal may be or include at least one of lithium, sodium, potassium, rubidium, or cesium. For example, M may be lithium or sodium.

A representative example of the (meth)acrylic binder according to one example embodiment is as shown in the following Chemical Formula 8:

Chemical Formula 8:

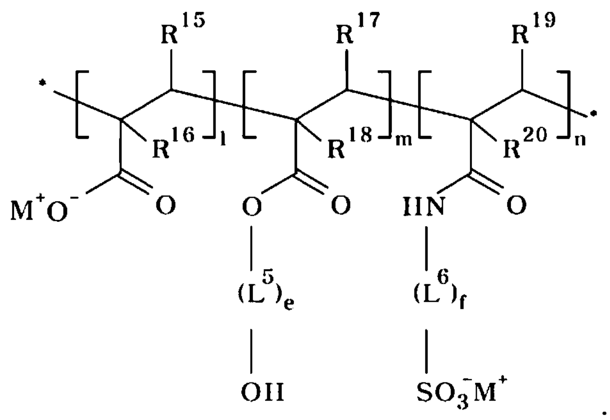

The description of the above Chemical Formula 8 is as follows.

$R^{15}$ to $R^{20}$ may each independently be or include hydrogen or a C1 to C10 alkyl group. For example, $R^{15}$ to $R^{17}$, $R^{19}$ and $R^{20}$ may each be or include hydrogen or a methyl group; and $R^{18}$ may be or include a methyl group.

$L^5$ and $L^6$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^5$ may be or include a methylene group or an ethylene group, and $L^6$ may be or include $*\text{-}C(CH_3)_2\text{-}CH_2\text{-}*$.

M may be or include an alkali metal, and the alkali metal may be or include at least one of lithium, sodium, potassium, rubidium, or cesium. For example, M may be lithium or sodium. e and f may each be independently an integer in a range from 0 to 2. For example, e and f may all be equal to 1.

1, m, and n may be molar ratios of each unit, and l+m+n=1. For example, 0.20≤1≤0.75, 0.01≤m≤0.2, and

$0.2 \leq n \leq 0.75$, for example, $0.25 \leq 1 \leq 0.70$, $0.01 \leq m \leq 0.15$, and $0.25 \leq n \leq 0.75$, or $0.3 \leq 1 \leq 0.65$, $0.05 \leq m \leq 0.15$, and $0.3 \leq n \leq 0.65$.

The (meth)acrylic binder may include an alkali metal. The alkali metal may be present in the form of a cation, for example, lithium, sodium, potassium, rubidium, or cesium. For example, the alkali metal may be present in the form of a salt combined with the (meth)acrylic binder. The alkali metal may assist the synthesis of the (meth)acrylic binder in an aqueous solvent, improve the adhesion of the coating layer, and improve the heat resistance, air permeability, and oxidation resistance of the separator.

The alkali metal may be included in an amount in a range of ≥ 1 wt% to ≤ 40 wt%, for example, 1 wt% to 30 wt%, 1 wt% to 20 wt%, or 10 wt% to 20 wt% based on the total content of the alkali metal and the (meth)acrylic binder. For example, the (meth)acrylic binder and the alkali metal may be included in a weight ratio in a range of ≥ 99:1 to ≤ 60:40, a weight ratio in a range of 99:1 to 70:30, for example, a weight ratio in a range of 99:1 to 80:20, for example, a weight ratio in a range in a range of 90:10 to 80:20.

The alkali metal may be included in an amount in a range of 0.1 mol% to 1.0 mol% based on the total content of the alkali metal and the (meth)acrylic binder. When the alkali metal is included within the above range, the coating layer may have a desired or improved adhesion, and a separator including the coating layer may exhibit a desired or improved heat resistance, air permeability, and oxidation resistance.

The (meth)acrylic heat-resistant binder may have various forms, such as an alternating polymer in which the structural units are alternately distributed, a random polymer in which the structural units are randomly distributed, or a graft polymer in which some of the structural units are grafted.

A weight average molecular weight of the (meth)acrylic binder may be in a range of ≥ 100,000 g/mol to 1,000,000 g/mol, 100,000 g/mol to 500,000 g/mol, 100,000 g/mol to 150,000 g/mol, 130,000 g/mol to 200,000 g/mol, or 300,000 g/mol to 900,000 g/mol. When the weight average molecular weight of the (meth)acrylic binder satisfies the above range, the (meth)acrylic binder may exhibit desired or improved adhesion and low resistance. The weight average molecular weight may be a polystyrene-converted average molecular weight measured using, e.g., gel permeation chromatography.

The (meth)acrylic binder may be prepared by a solution polymerization method.

According to one example embodiment, the (meth)acrylic binder may be included in a film form in the coating layer of the separator.

The crosslinking agent includes an aziridine-based crosslinking agent.

The aziridine-based crosslinking agent may crosslink the (meth)acrylic binder to facilitate the separator in reaching the above-described thermal shrinkage rate range in the electrolyte. In addition, the aziridine-based crosslinking agent may crosslink the (meth)acrylic binder to significantly lower the membrane resistance of the separator. In addition, the aziridine-based crosslinking agent may crosslink the (meth)acrylic binder to increase the adhesion to the electrode.

The aziridine-based crosslinking agent may be or include a bifunctional or higher aziridine-based crosslinking agent. Here, "bifunctional or higher" means that there are two or more aziridine groups in the molecule. According to one example embodiment, the aziridine-based crosslinking agent may be or include a bifunctional or trifunctional aziridine-based crosslinking agent.

For example, the aziridine-based crosslinking agent may include one or more of N,N'-toluene-2,4-bis(1-aziridine carboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

The crosslinking agent, for example, the aziridine-based crosslinking agent, may be included in a desired amount with respect to the binder, for example, the (meth)acrylic binder. According to one example embodiment, the crosslinking agent may be included in an amount in a range of ≥ 5 parts by weight to ≤ 50 parts by weight, for example, 5,6,7,8,9,10,11,12,13,14,15,16,17,18,19,20,21,22,23,24,25,26,27,28,29,30,31,32,33,34,35,36,37, 38,39,40,41,42,43,44,45,46,47,48,49,50 parts by weight, 5 parts by weight to 30 parts by weight, 5 parts by weight to 25 parts by weight, or 5 parts by weight to 20 parts by weight, based on 100 parts by weight of the (meth)acrylic binder. In the above range, the thermal shrinkage rate and membrane resistance of the separator in the electrolyte may be significantly lowered.

The filler includes a mixture of a first filler and a second filler, wherein the first filler is an inorganic filler and the second filler is a fibrous filler.

In one example embodiment, the inorganic filler may be or include a non-fibrous filler rather than a fibrous filler.

The first filler may be spherical, platy, cubic, or amorphous. For example, the first filler may be cubic, and in the case of the cubic type, the above-described thermal shrinkage rate may be significantly lowered.

The first filler may have an average particle size D50 in a range of ≥ 100 nm to ≤ 200 nm, for example, 100, 105, 110, 115, 120, 125, 130, 135, 140, 145, 150, 155, 160, 165, 170, 175, 180, 185, 190, 195, 200 nm, 120 nm to 180 nm or 150 nm. In the above range, it may be possible to reach the above-described dry thermal shrinkage rate and wet thermal shrinkage rate when the first filler is combined with the second filler described below.

The first filler may be or include a ceramic material as an inorganic filler. The inorganic filler may include at least

one of a metal oxide, a metalloid oxide, a metal fluoride, a metal hydroxide, or a combination thereof. The inorganic filler may include at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. For example, the filler may preferably be boehmite.

The second filler is a fibrous filler. The fibrous filler has a fibrous form and fills the space between the first fillers, thereby improving ionic conductivity and membrane resistance characteristics .

In one example embodiment, the fibrous filler may have an aspect ratio of ≥ 5 or more, for example, in a range of ≥ 5 to ≤ 500. Here, the aspect ratio refers to a ratio of the length to the size of the fibrous filler. The size of the fibrous filler may be in a range of ≥ 10 nm to ≤ 200 nm, for example 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200 nm, 10 nm to 100 nm, and the length may be 100 nm or more, for example 100 nm to 1000 nm. In the above range, the aspect ratio may be readily achieved.

The fibrous filler may include at least one of boehmite, carbon nanotubes, silver nanowires, boron carbide nanowires, nanocellulose, copper hydroxide nanowires, silicon monoxide nanowires, hydroxyapatite nanowires, $Al_2O_3$, $TiO_2$, $SiO_2$, or a combination thereof.

The first filler and the second filler may be included in a weight ratio in a range of ≥ 50:50 to ≤ 95:5 based on 100 parts by weight of the mixture. In the above range, the wight ratio may be advantageous for lowering the dry thermal shrinkage rate and the wet thermal shrinkage rate. For example, the weight ratio may be in a range of 50:50, 55:45, 60:40, 65:35, 70:30, 75:25, 80:20, 85:15, 90:10, 95:5, 60:40 to 95:5, of ≥ 60:40 to ≤ 95:5, or 70:30 to 90:10, and in the above range, ionic conductivity characteristics may be further improved.

The filler, that is, the mixture, and the (meth)acrylic binder, may be included in a (meth)acrylic binder: mixture mass ratio in a range of ≥ 1:10 to ≤ 1:40, for example, 1:10, 1:15, 1:20, 1:25, 1:30, 1:35, 1:40, 1:10 to 1:40 or 1:20 to 1:30. In the above range, there may be an effect of improving heat resistance within the electrolyte.

The filler, e.g., the mixture, may be included in an amount in a range of ≥ 50 wt% to ≤ 99 wt%, for example, 70 wt% to 99 wt%, for example, 75 wt% to 99 wt%, for example, 80 wt% to 99 wt%, for example, 85 wt% to 99 wt%, for example, 90 wt% to 99 wt%, for example, 95 wt% to 99 wt% of the total amount of the coating layer. When the filler is included within the above range, desired or improved heat resistance, durability, oxidation resistance and stability may be exhibited.

Each of the coating layers may have a thickness in a range of ≥ 0.01 μm to ≤ 20 μm, and within the above range, the thickness may be 0.01 μm to 7 μm, 0.1 μm to 5 μm, or 0.1 μm to 3 μm. For example, the coating layer may have a thickness in a range of ≥ 0.1 μm to ≤ 2 μm.

The ratio of the thickness of the coating layer to the thickness of the porous substrate may range from about 0.01 to ≤ 0.7, for example, from 0.01 to 0.5, from 0.01 to 0.4, or from 0.01 to 0.3. In the above range, the separator can exhibit desired or improved air permeability, heat resistance, and adhesiveness. Here, the term "thickness of the coating layer" means the thickness of one coating layer when the coating layer is formed on only one surface of the porous substrate, and means the total thickness of two coating layers when the coating layer is formed on both surfaces of the porous substrate.

## Porous substrate

The porous substrate has a large number of pores and may be or include a substrate typically used in electrochemical devices. The porous substrate may be or include, but is not limited to, a polymer film formed from or including one polymer such as or including at least one of polyolefins such as polyethylene and polypropylene, polyesters such as polyethylene terephthalate, polyethylene naphthalate, and polybutylene terephthalate, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, glass fiber, Teflon, and polytetrafluoroethylene, or a copolymer or mixture of two or more thereof.

The porous substrate may be or include, for example, a polyolefin-based substrate including a polyolefin, and the polyolefin-based substrate has a desired or improved shutdown function, and thus may contribute to improving the safety of the battery. The polyolefin-based substrate may be or include, for example, at least one of a polyethylene single layer film, a polypropylene single layer film, a polyethylene/polypropylene two-layer film, a polypropylene/polyethylene/polypropylene three-layer film, and a polyethylene/polypropylene/polyethylene three-layer film. In addition, the polyolefin-based resin may include a non-olefin resin in addition to an olefin resin, or may include a copolymer of olefin and non-olefin monomers.

The porous substrate may have a thickness in a range of ≥ 1 μm to ≤ 40 μm, for example, 1 μm to 30 μm, 1 μm to 20 μm, or 5 μm to 15 μm.

The porous substrate may have an air permeability of less than about 200 sec/100 cc, for example, about 190 sec/100 cc or less or about 180 sec/100 cc or less. In the above range, the porous substrate may be used in the separator.

The separator for a rechargeable battery according to one example embodiment may be formed by applying a composition for forming a coating layer on one side, or on both sides, of a porous substrate, and then drying the composition. The drying may be performed using conventional methods known to those skilled in the art.

FIG. 1 is a cross-sectional view showing a separator for a rechargeable lithium battery according to one example embodiment.

Referring to FIG. 1, the separator for a rechargeable lithium battery includes a porous substrate 1 and a coating layer 2 located on each side of the porous substrate 1. The coating layer 2 may include a crosslinked product 4 of a (meth) acrylic binder and an aziridine-based crosslinking agent, a first filler 3, and a second filler 5.

Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be located between the positive electrode and the negative electrode.

Positive electrode

A positive electrode for a rechargeable lithium battery may include a current collector and a positive electrode active material layer on the current collector. The positive electrode active material layer may include a positive electrode active material, and may further include a binder and/or a conductive material. For example, the positive electrode may further include an additive that can constitute a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_dX_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$($0.90 \le a \le 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content greater than or equal to ≤ 80 mol%, greater than or equal to ≤ 85 mol%, greater than or equal to ≤ 90 mol%, greater than or equal to ≤ 91 mol%, or greater than or equal to ≤ 94 mol%, and less than or equal to ≤ 99 mol%, based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of ≥ 90 wt% to ≤ 99.5 wt% based on 100 wt% of the positive electrode active material layer. Amounts of each of the binder and the conductive material may independently be in a range of ≥ 0.5 wt% to ≤ 5 wt%, respectively, based on 100 wt% of the positive electrode active material layer.

The binder attaches the positive electrode active material particles to each other, and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery), and that conducts electrons, can be used in the battery. Examples of the conductive material may include a

carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in the form of a metal powder or a metal fiber, a conductive polymer such as a polyphenylene derivative, or a mixture thereof.

Al may be used as the current collector, but the current collector is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to ≤ 99 wt% of the negative electrode active material, about 0.5 wt% to ≤ 5 wt% of the binder, and about 0 wt% to ≤ 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl

cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

<u>Electrolyte Solution</u>

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

For example, when using a carbonate-based solvent, a cyclic carbonate and a chain carbonate may be mixed together, and the cyclic carbonate and the chain carbonate may be mixed in a volume ratio in a range of $\geq$ 1:1 to $\leq$ 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIG. 2 to FIG. 5 are schematic views illustrating a rechargeable lithium battery according to an example embodiment. FIG. 2 shows a cylindrical battery, FIG. 3 shows a prismatic battery, and FIG. 4 and FIG. 5 show pouch-type batteries. Referring to FIG. 2 to FIG. 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 4 and FIG. 5, the rechargeable lithium battery 100 may include an electrode tab 70 illustrated in FIG. 5, or for example a positive electrode tab 71 and a negative electrode tab 72 illustrated in FIG. 4, the electrode tabs 70/71/72 forming an electric path for inducing the current formed in the electrode assembly 40 to the outside of the battery 100.

The rechargeable lithium battery according to an example embodiment may be applicable to automobiles, mobile phones, and/or various types of electric devices, as non-limiting examples.

Hereinafter, examples and comparative examples of the present disclosure are described. However, the following examples are merely presented as examples of the present disclosure, and the present disclosure is not limited to the following examples.

**Preparation Example 1**

Into a 3 L four-necked separable flask equipped with a stirrer, a thermometer, and a condenser, distilled water (1249.72 g), a 20% lithium hydroxide aqueous solution (203.69 g), acrylic acid (AA, 0.3 mol), 2-hydroxyethyl methacrylate (HEMA, 0.10 mol), 2-acrylamido-2-methylpropanesulfonic acid (AMPS, 0.6 mol), and ammonium persulfate (0.001 mol) were input, and then an operation of reducing an internal pressure to 10 mmHg with a diaphragm pump and returning the internal pressure to normal pressure with nitrogen was repeated three times. The reaction was performed for 12 hours while controlling heating so that the temperature of a reaction solution was stabilized between 65 °C and 70 °C. After cooling to room temperature, about 10 mL of the reaction solution was taken and a non-volatile (NV) component content was measured, which was 9.8 wt% (theoretical value: 10 wt%). In addition, in the resulting poly(acrylic acid-co-2-hydroxyethyl methacrylate-co-2-acrylamido-2-methylpropanesulfonic acid) lithium salt, a molar ratio of a first structural unit derived from lithium acrylate, a second structural unit derived from 2-hydroxyethyl methacrylate, and a third structural unit derived from lithium 2-acrylamido-2-methylpropane sulfonate was 30:10:60.

**Preparation Example 2**

In Preparation Example 1, the content of each monomer was changed to prepare a poly(acrylic acid-co-2-hydroxyethyl methacrylate-co-2-acrylamido-2-methylpropanesulfonic acid) lithium salt. A molar ratio of lithium acrylate, 2-hydroxyethyl methacrylate, and lithium 2-acrylamido-2-methylpropane sulfonate is 40:10:50. About 10 mL of a reaction solution (reaction product) was taken and a non-volatile component content was measured, which was 9.0 wt% (theoretical value: 10 wt%).

**Preparation Example 3**

In Preparation Example 1, the content of each monomer was changed to prepare a poly(acrylic acid-co-2-hydroxyethyl methacrylate-co-2-acrylamido-2-methylpropanesulfonic acid) lithium salt. A molar ratio of lithium acrylate, 2-hydroxyethyl methacrylate, and lithium 2-acrylamido-2-methylpropane sulfonate was 65:5:30. About 10 mL of a reaction solution (reaction product) was taken and a non-volatile component content was measured, which was 9.0 wt% (theoretical value: 10 wt%).

**Preparation Example 4**

In Preparation Example 1, the content of each monomer was changed to prepare a poly(acrylic acid-co-2-hydroxyethyl methacrylate-co-2-acrylamido-2-methylpropanesulfonic acid) lithium salt. A molar ratio of lithium acrylate, 2-hydroxyethyl methacrylate, and lithium 2-acrylamido-2-methylpropane sulfonate was 40:5:55. About 10 mL of a reaction solution (reaction product) was taken and a non-volatile component content was measured, which was 9.0 wt% (theoretical value: 10 wt%).

**Preparation Example 5**

An acrylic copolymer was prepared in the same manner as in Preparation Example 1, except that 2-hydroxyethyl methacrylate and 2-acrylamido-2-methylpropanesulfonic acid were used and acrylic acid was not used. A molar ratio of 2-hydroxyethyl methacrylate:lithium 2-acrylamido-2-methylpropane sulfonate was 74:26. A non-volatile component content of the reaction solution was 9.0 wt% (theoretical value: 10 wt%).

**Preparation Example 6**

An acrylic copolymer was prepared in the same manner as in Preparation Example 1, except that acrylic acid and 2-acrylamido-2-methylpropanesulfonic acid were used, and 2-hydroxyethyl methacrylate was not used. A molar ratio of acrylic acid:lithium 2-acrylamido-2-methylpropane sulfonate was 74:26. A non-volatile component content of the reaction solution was 9.0 wt% (theoretical value: 10 wt%).

**Preparation Example 7**

An acrylic copolymer was prepared in the same manner as in Preparation Example 1, except that acrylic acid and 2-hydroxyethyl methacrylate were used and 2-acrylamido-2-methylpropanesulfonic acid was not used. A molar ratio of lithium acrylate:2-hydroxyethyl methacrylate was 42:58. A non-volatile component content of the reaction solution was 9.0 wt% (theoretical value: 10 wt%).

**Example 1**

Boehmite (particle size D50: 150 nm, KB-01S of DAEJOO·KC CO., LTD, cubic) as a first filler and nanofibers (boehmite, length: 100 to 500 nm, size: 10 to 50 nm) as a second filler were mixed in a weight ratio of 90:10 based on a total of 100 parts by weight to prepare a mixture.

The (meth)acrylic binder (10 wt% in distilled water) prepared in Preparation Example 1 and the mixture prepared above were mixed at a (meth)acrylic binder:filler mass ratio of 1:20, input into a water solvent, then milled and dispersed using a bead mill at 25 °C for 30 minutes to prepare a dispersion.

Trimethylolpropane tris(2-methyl-1-aziridine propionate) (trifunctional aziridine-based crosslinking agent) as an aziridine-based crosslinking agent was input into the dispersion, and water was added so that the total solid content became 20 wt% to prepare a composition for forming a coating layer. At this time, the aziridine-based crosslinking agent was included in an amount of 10 parts by weight based on 100 parts by weight of the methacrylic binder.

The composition for forming a coating layer was applied to a thickness of 1 μm (a total thickness of 2 μm) on both sides of a polyethylene-based film (thickness: 5.5 μm, CZMZ, air permeability: 110 sec/100 cc, puncture strength: 340 kgf) as a porous substrate using a die coating method, and then dried and aged in an oven at 70 °C for 16 hours to form a coating layer, thereby manufacturing a separator for a rechargeable lithium battery.

**Example 2**

A separator was manufactured in the same manner as in Example 1, except that a weight ratio between the fillers was changed to 70:30 in Example 1.

**Examples 3 to 5**

Separators were manufactured in the same manner as in Example 1, except that a binder type was changed as shown in Table 1 below and used instead of the binder of Preparation Example 1 in Example 1.

**Comparative Example 1**

A separator was manufactured in the same manner as in Example 1, except that an aziridine-based crosslinking agent was not used in Example 1.

**Comparative Example 2**

A separator was manufactured in the same manner as in Example 1, except that a first filler was not used in Example 1.

**Comparative Examples 3 to 5**

Separators were manufactured in the same manner as in Example 1, except that a binder type was changed as shown in Table 1 below and used instead of the binder of Preparation Example 1 in Example 1.

**Comparative Example 6**

A separator was manufactured in the same manner as in Example 1, except that ethylene glycol diglycidyl ether (epoxy-based crosslinking agent) was used instead of the aziridine-based crosslinking agent in Example 1.

**Comparative Example 7**

A separator was manufactured in the same manner as in Example 1, except that CARBODILITE V-50 (Nisshinbo Chemical) was used as a carbodiimide (CDI)-based crosslinking agent instead of the aziridine-based crosslinking agent in

Example 1.

**Dry thermal shrinkage rate (units: %)**

Each separator for rechargeable lithium batteries of the examples and comparative examples was cut into a size of 8 cm × 8 cm to prepare a sample. After drawing a 5 cm X 5 cm square on the surface of the sample, the sample was placed between paper or alumina powder, left in an oven at 150 °C for 1 hour, and taken out, the dimensions of the sides of the drawn square were measured, and the thermal shrinkage rate in each of the machine direction (MD) and transverse direction (TD) was calculated. The thermal shrinkage rate is calculated according to Mathematical Formula 1 below.

Mathematical Formula 1:

$$\text{Shrinkage rate} = (L0 - L1) / L0 \times 100.$$

L0 is the initial length of the separator, and L1 is the length of the separator after being left at 150 °C for 1 hour.

**Thermal shrinkage rate in electrolyte (wet thermal shrinkage rate, units: %)**

Manufacture of negative electrode:

97 wt% of graphite particles with an average particle size of 25 μm as a negative electrode active material, 1.5 wt% of a styrene-butadiene rubber (SBR) binder, and 1.5 wt% of carboxymethyl cellulose (CMC) were mixed, and then the mixture was input into distilled water and stirred for 60 minutes using a mechanical stirrer to prepare a negative electrode active material slurry. The slurry was applied onto a 10 μm-thick copper current collector using a doctor blade, dried in a hot air dryer at 100 °C for 0.5 hour, dried again under vacuum at 120 °C for 4 hours, and then roll-pressed to manufacture a negative electrode.

Manufacture of positive electrode:

97 wt% of $LiCoO_2$ as a positive electrode active material, 1.5 wt% of carbon black powders as a conductive material, and 1.5 wt% of polyvinylidene fluoride (PVdF) were mixed, input into an N-methyl-2-pyrrolidone solvent, and stirred for 30 minutes using a mechanical stirrer to prepare a positive electrode active material slurry. The slurry was applied onto a 20 μm-thick aluminum current collector using a doctor blade, dried in a hot air dryer at 100 °C for 0.5 hour, dried again under vacuum at 120 °C for 4 hours, and then roll-pressed to manufacture a positive electrode.

One sheet of the sample was placed between the positive electrode and the negative electrode to manufacture three sets of positive electrode-sample-negative electrode laminates, which were then placed in a pouch. 3 g of an electrolyte (1.5 M $LiPF_6$ dissolved in ethylene carbonate, ethyl methyl carbonate, and dimethyl carbonate (volume ratio of 30:50:20 based on the total volume of 100)) was injected to completely saturate the laminate with the electrolyte, and the sample was sealed and left at 25 °C for 12 hours. Then, after being left in an oven at 150 °C for 1 hour, the sample was taken out and cooled, and then the dimensions of the sides of the sample were measured to calculate a shrinkage rate. The shrinkage rate may be calculated according to the above Mathematical Formula 1.

**Substrate adhesion (units: N)**

A 12 mm-wide 3M tape was attached in the TD direction, and then pressed once using a 3 kg roller to create a specimen. The peel force was measured at a speed of 20 mm/min using a tensile tester and the average value in the 10 to 40 mm section was taken as the measurement value.

**Membrane resistance (units: Ω)**

The membrane resistance was evaluated as electrochemical impedance spectroscopy (EIS) resistance. The separators manufactured in the examples and comparative examples were impregnated with an electrolyte (1.5 M $LiPF_6$ dissolved in a mixed solvent of ethylene carbonate, ethyl methyl carbonate, and dimethyl carbonate (volume ratio of 2/1/7)), fitted onto an aluminum foil electrode with a lead tab, and sealed in an aluminum pack to manufacture test cells, and the resistance (Ω) of the test cell was measured at 20 °C by the AC impedance method (measurement frequency 100 kHz).

Table 1:

| | | Examples | | | | |
|---|---|---|---|---|---|---|
| | | 1 | 2 | 3 | 4 | 5 |
| Binder | AA | 30 | 30 | 40 | 65 | 40 |
| | HEMA | 10 | 10 | 10 | 5 | 5 |
| | AMPS | 60 | 60 | 50 | 30 | 55 |
| Filler weight ratio | | 90:10 | 70:30 | 90:10 | 90:10 | 90:10 |
| Crosslinking agent | | Aziridine | Aziridine | Aziridine | Aziridine | Aziridine |
| Dry thermal shrinkage rate | MD | 2.4 | 2.8 | 2.6 | 2.1 | 2.3 |
| | TD | 1.0 | 1.3 | 1.5 | 1.4 | 1.2 |
| Wet thermal shrinkage rate | MD | 3.1 | 4.8 | 4.7 | 3.5 | 3.4 |
| | TD | 2.7 | 3.9 | 3.6 | 2.4 | 2.6 |
| Substrate adhesion | | 1.55 | 1.64 | 1.61 | 1.56 | 1.57 |
| Membrane resistance | | 0.61 | 0.57 | 0.59 | 0.63 | 0.58 |

(Table 1 continued)

| | | Comparative Examples | | | | | | |
|---|---|---|---|---|---|---|---|---|
| | | 1 | 2 | 3 | 4 | 5 | 6 | 7 |
| Binder | AA | 30 | 30 | 0 | 74 | 42 | 30 | 30 |
| | HEMA | 10 | 10 | 74 | 0 | 58 | 10 | 10 |
| | AMPS | 60 | 60 | 26 | 26 | 0 | 60 | 60 |
| Filler weight ratio | | 90:10 | 0:100 | 90:10 | 90:10 | 90:10 | 90:10 | 90:10 |
| Crosslinking agent | | - | Aziridine | Aziridine | Aziridine | Aziridine | Epoxy | Carbo |
| Dry thermal shrinkage rate | MD | 4.3 | 8.4 | 4.1 | 3.9 | 3.8 | 2.4 | 2.7 |
| | TD | 3.2 | 6.7 | 3.4 | 2.7 | 2.4 | 1.1 | 1.8 |
| Wet thermal shrinkage rate | MD | 19.7 | 24.8 | 21.3 | 22.7 | 20.8 | 21.6 | 22.1 |
| | TD | 15.6 | 21.5 | 17.4 | 16.5 | 15.3 | 16.8 | 14.6 |
| Substrate adhesion | | 1.71 | 1.68 | 0.87 | 1.64 | 1.65 | 1.69 | 1.58 |
| Membrane resistance | | 0.6 | 0.59 | 0.6 | 0.84 | 0.62 | 0.61 | 0.58 |

As shown in Table 1 above, the separators for rechargeable lithium batteries of the examples can provide a low thermal shrinkage rate, low membrane resistance, and high substrate adhesion, thereby increasing battery reliability.

A separator for a rechargeable battery according to one example embodiment can improve the capacity, safety, and lifespan of a battery by providing a low thermal shrinkage rate, high rate characteristics during charging and discharging, low membrane resistance, and high substrate adhesion.

Although the example embodiments of the present disclosure have been described above, the present disclosure is not limited thereto, and various modifications may be made within the scope of the claims, the detailed description of the disclosure, and the attached drawings, which also fall within the scope of the present disclosure.

## Claims

**1.** A separator (30) for a rechargeable battery (100), the separator (30) comprising:

a porous substrate; and
a coating layer on at least one surface of the porous substrate;

wherein the coating layer includes a crosslinked product of a binder and a crosslinking agent, and a filler, the binder includes a (meth)acrylic binder including a first structural unit derived from (meth)acrylic acid, (meth) acrylate, or a salt thereof, a second structural unit derived from hydroxyalkyl (meth)acrylate, and a third structural unit derived from (meth)acrylamidosulfonic acid or a salt thereof,
the crosslinking agent includes an aziridine-based crosslinking agent, and
the filler includes a mixture of a first filler and a second filler, wherein the first filler is an inorganic filler and the second filler is a fibrous filler.

2. The separator (30) of claim 1, wherein the (meth)acrylic binder comprises a salt-based binder.

3. The separator (30) of claim 1 or 2, wherein the first filler and the second filler are included in a weight ratio in a range of ≥ 50:50 to ≤ 95:5 based on 100 parts by weight of the mixture.

4. The separator (30) of any of the claims 1 to 3, wherein the first filler has an average particle size D50 in a range of ≥ 100 nm to ≤ 200 nm.

5. The separator (30) of any of the claims 1 to 4, wherein the second filler has an aspect ratio of ≥ 5 or more.

6. The separator (30) of any of the claims 1 to 5, wherein the second filler fills space between the first fillers.

7. The separator (30) of any of the claims 1 to 6, wherein the (meth)acrylic binder and the mixture are included in a mass ratio in a range of ≥ 1:10 to ≤ 1:40.

8. The separator (30) of any of the claims 1 to 7, wherein the aziridine-based crosslinking agent comprises one or more of N,N'-toluene-2,4-bis(1-aziridine carboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridine propionate), trimethylolpropane tris(beta-N-aziridinyl)propionate, and pentaerythritol tris(3-(1-aziridinyl)propionate).

9. The separator (30) of any of the claims 1 to 8, wherein the crosslinking agent is included in an amount in a range of ≥ 5 parts by weight to ≤ 50 parts by weight based on 100 parts by weight of the (meth)acrylic binder.

10. The separator (30) of any of the claims 1 to 9, wherein the first structural unit is represented by at least one of Chemical Formula 1, Chemical Formula 2, Chemical Formula 3, and a combination thereof:

Chemical Formula 1:

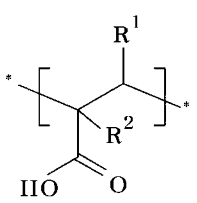

;

Chemical Formula 2:

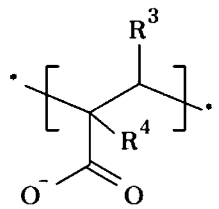

;

Chemical Formula 3:

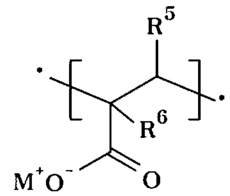

;

the second structural unit is represented by Chemical Formula 4:

Chemical Formula 4:

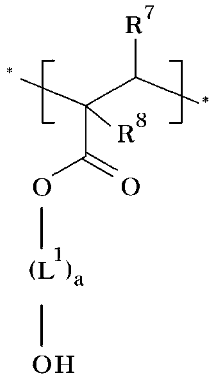

; and

the third structural unit is represented by at least one of Chemical Formula 5, Chemical Formula 6, Chemical Formula 7, and a combination thereof:

Chemical Formula 5:

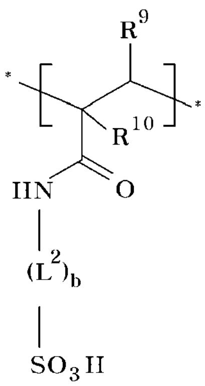

;

Chemical Formula 6:

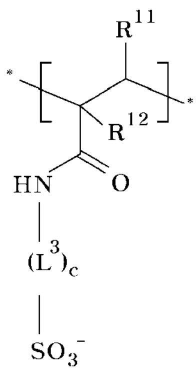

;

Chemical Formula 7:

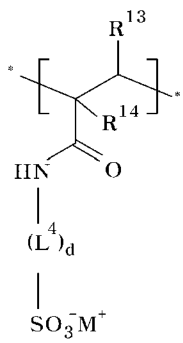

;

wherein $R^1$ to $R^{14}$ each independently comprises hydrogen or a C1 to C10 alkyl group,
$L^1$ to $L^4$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, and d are each independently an integer in a range from 0 to 2, and
M comprises an alkali metal.

**11.** The separator (30) of any of the claims 1 to 10, wherein the (meth)acrylic binder is represented by Chemical Formula 8:

Chemical Formula 8:

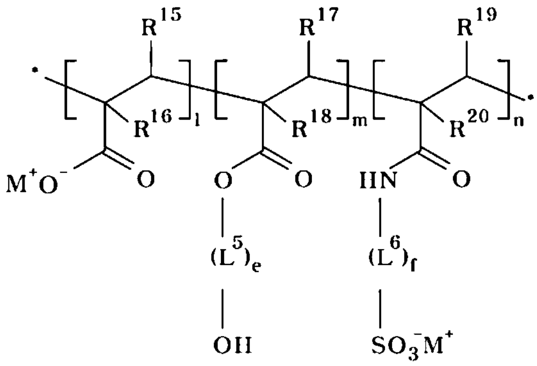

;

wherein:

$R^{15}$ to $R^{20}$ each independently comprises hydrogen or a C1 to C10 alkyl group,
$L^5$ and $L^6$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
e and f are each independently an integer in a range from 0 to 2,
M comprises an alkali metal, and
1, m, and n are molar ratios of each unit, and l+m+n=1.

**12.** The separator (30) of any of the claims 1 to 11, wherein:

the first structural unit is included in an amount in a range of ≥ 20 mol% to ≤ 75 mol%;
the second structural unit is included in an amount in a range of ≥ 1 mol% to ≤ 20 mol%; and
the third structural unit is included in an amount in a range of ≥ 20 mol% to ≤ 75 mol%; based on 100 mol% of the (meth)acrylic binder.

**13.** The separator (30) of any of the claims 1 to 12, wherein a sum of the contents of the first structural unit, the second structural unit, and the third structural unit is ≥ 95 mol% or more based on 100 mol% of the (meth)acrylic binder and/or the aziridine-based crosslinking agent is included in an amount of ≥ 95 wt% or more of a total crosslinking agent in a composition for the coating layer.

**14.** The separator (30) of any of the claims 1 to 13, wherein the coating layer has a thickness in a range of ≥ 0.1 μm to ≤ 2 μm.

**15.** A rechargeable battery (100) comprising:

a positive electrode (10);
a negative electrode (20); and
the separator (30) of any of the claims 1 to 14 between the positive electrode (10) and the negative electrode (20).

FIG 1.

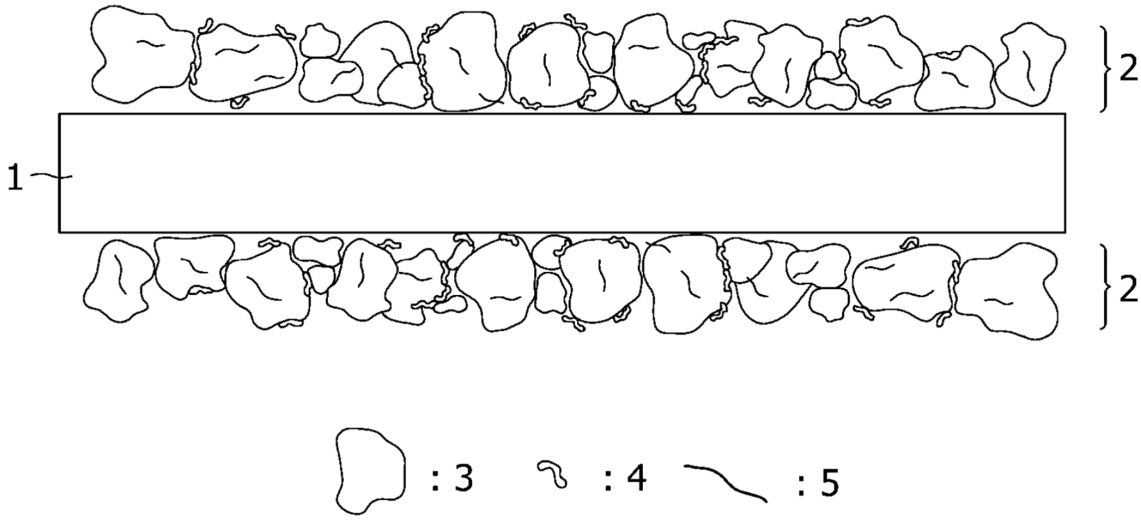

FIG 2.

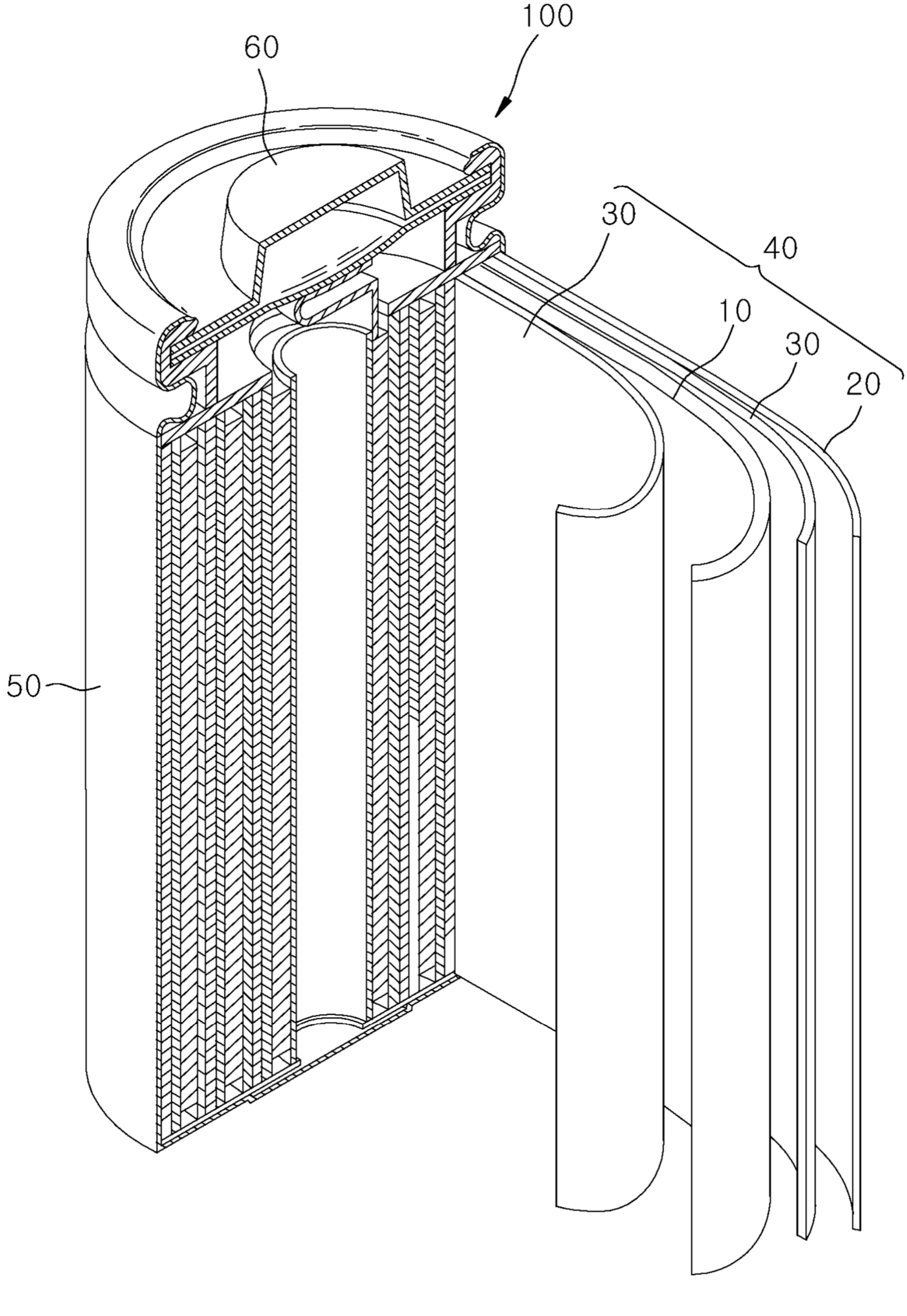

FIG 3.

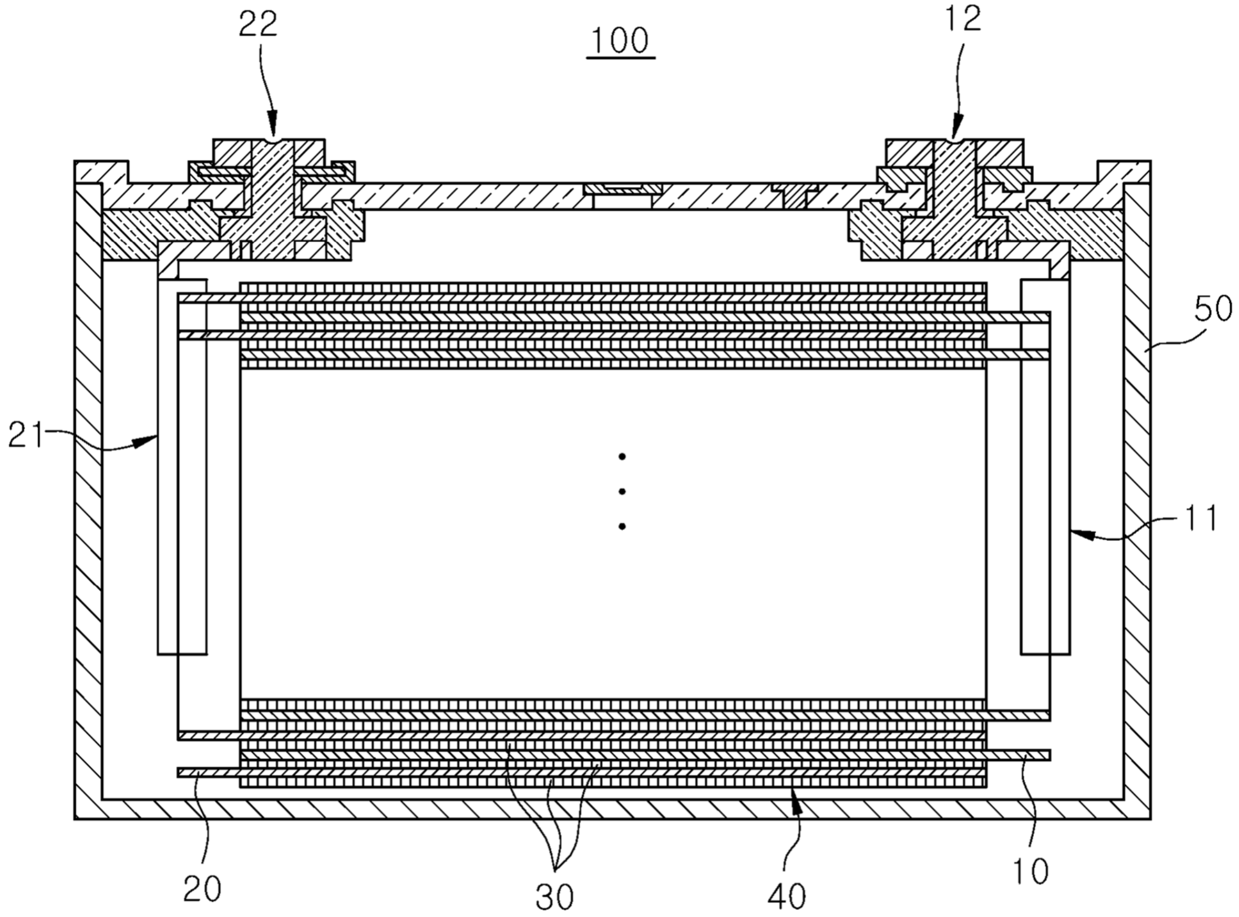

FIG 4.

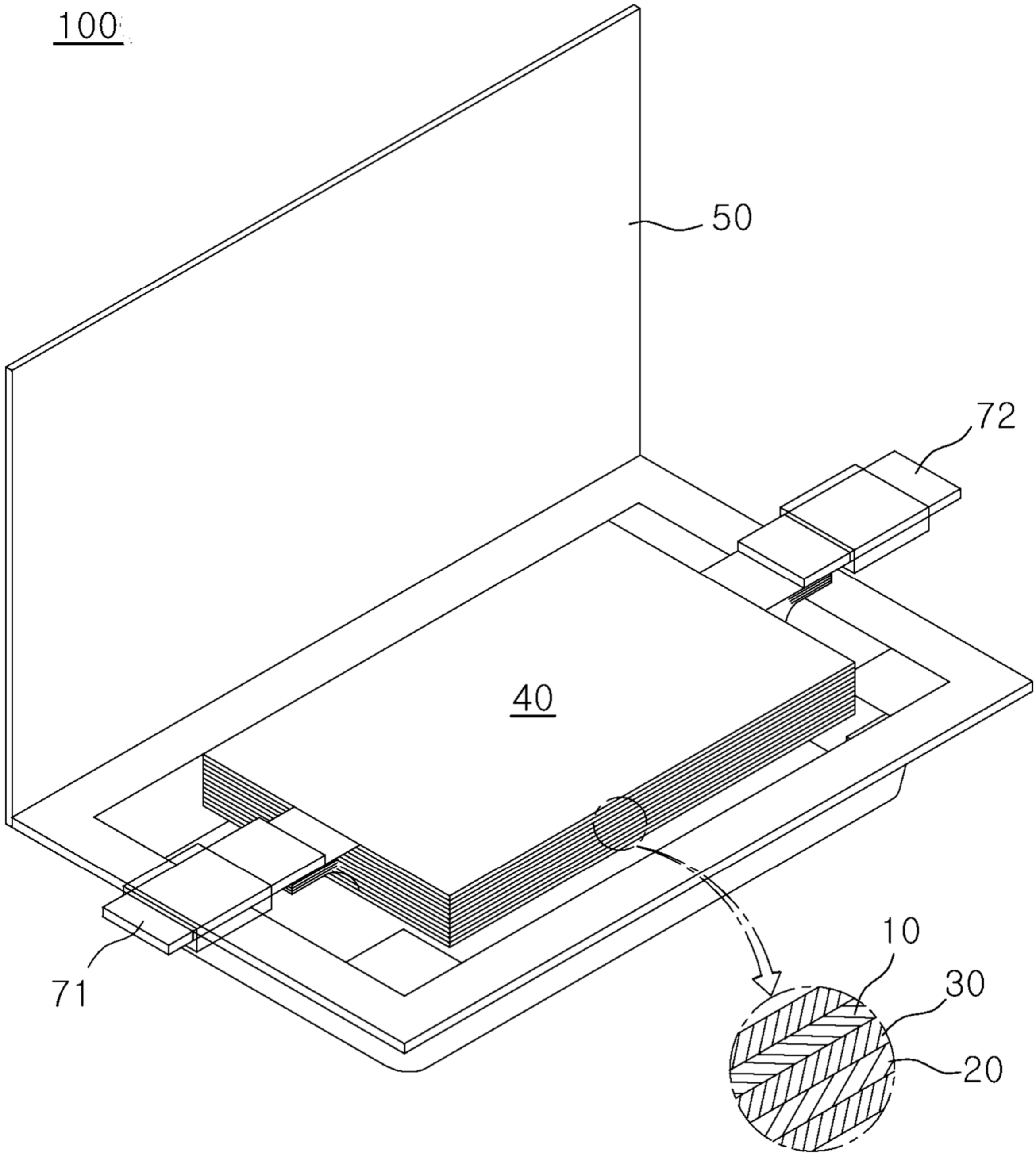

FIG 5.

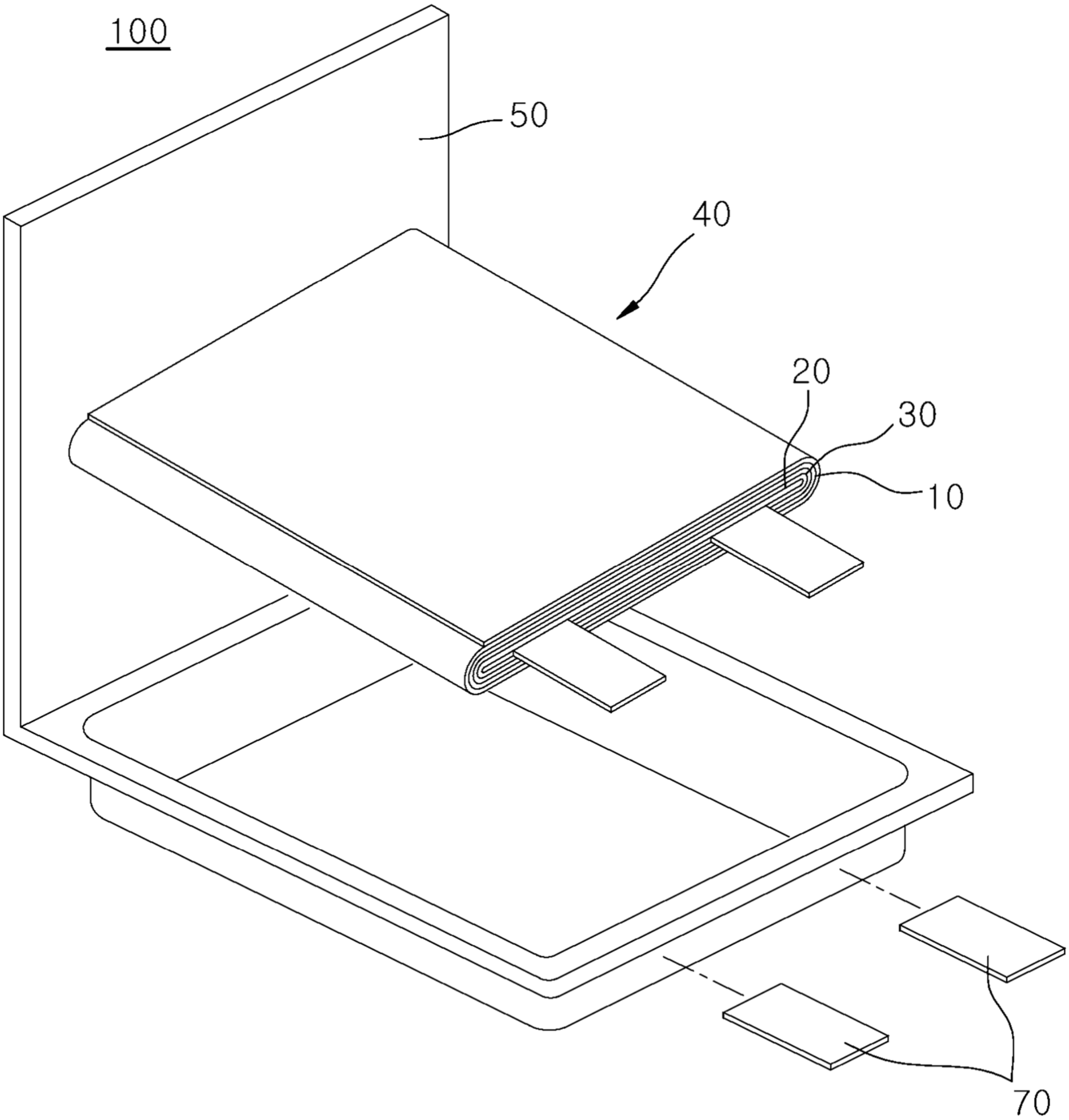

Europäisches Patentamt
European Patent Office
Office européen des brevets

# EUROPEAN SEARCH REPORT

Application Number
EP 25 21 6094

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/219366 A1 (SAMSUNG SDI CO LTD [KR]) 16 November 2023 (2023-11-16)<br>* paragraphs [0007], [0063] - [0064], [0068] - [0099], [0123] - [0166], [0168]; figures 1-4 *<br>& EP 4 525 183 A1 (SAMSUNG SDI CO LTD [KR]) 19 March 2025 (2025-03-19)<br>----- | 1-15 | INV.<br>H01M50/42<br>H01M50/443<br>H01M50/446<br>H01M50/449<br>H01M50/46 |
| Y | US 2024/145866 A1 (KIM SOOHEE [KR] ET AL) 2 May 2024 (2024-05-02)<br>* paragraphs [0010] - [0018], [0032], [0040] - [0099], [0111] - [0112], [0136] - [0168]; figures 1-3 *<br>----- | 1-15 | |
| Y | KR 2023 0126985 A (SAMSUNG SDI CO LTD [KR]) 31 August 2023 (2023-08-31)<br>* paragraphs [0033] - [0090], [0127] - [0128], [0132] - [0165]; figures 1-3 *<br>----- | 1-15 | |
| Y | US 2014/186680 A1 (KIM KEE-YOUNG [KR] ET AL) 3 July 2014 (2014-07-03)<br>* paragraphs [0009] - [0012], [0055] - [0056]; figure 1 *<br>----- | 1-15 | TECHNICAL FIELDS SEARCHED (IPC)<br>H01M |
| Y | KR 2013 0139200 A (LG CHEMICAL LTD [KR]) 20 December 2013 (2013-12-20)<br>* paragraphs [0003], [0012] - [0015], [0030] - [0031] *<br>----- | 1-15 | |
| Y | KR 2013 0092245 A (LG CHEMICAL LTD [KR]) 20 August 2013 (2013-08-20)<br>* paragraphs [0025], [0028] *<br>----- | 1-15 | |
| Y | US 2018/040868 A1 (JANG DAE SUNG [KR] ET AL) 8 February 2018 (2018-02-08)<br>* paragraphs [0011] - [0019], [0044]; figure 1 *<br>-----<br>-/-- | 1-15 | |

The present search report has been drawn up for all claims

1

| Place of search | Date of completion of the search | Examiner |
|---|---|---|
| The Hague | 25 March 2026 | Bravo Diaz, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 21 6094

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 677 590 A2 (LG CHEMICAL LTD [KR]; TORAY BATTERY SEPARATOR FILM [JP] ET AL.) 25 December 2013 (2013-12-25) * paragraphs [0011] - [0013], [0031]; figure 1 * ----- | 1-15 | |
| | | | TECHNICAL FIELDS SEARCHED (IPC) |

The present search report has been drawn up for all claims

1

| Place of search | Date of completion of the search | Examiner |
|---|---|---|
| The Hague | 25 March 2026 | Bravo Diaz, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 25 21 6094

This annex lists the patent family members relating to the patent documents cited in the above-mentioned European search report. The members are as contained in the European Patent Office EDP file on
The European Patent Office is in no way liable for these particulars which are merely given for the purpose of information.

25-03-2026

| Patent document cited in search report | Publication date | Patent family member(s) | Publication date |
|---|---|---|---|
| WO 2023219366 A1 | 16-11-2023 | CN 119174045 A | 20-12-2024 |
| | | EP 4525183 A1 | 19-03-2025 |
| | | KR 20230157182 A | 16-11-2023 |
| | | US 2025329872 A1 | 23-10-2025 |
| | | WO 2023219366 A1 | 16-11-2023 |
| US 2024145866 A1 | 02-05-2024 | KR 20220155022 A | 22-11-2022 |
| | | US 2024145866 A1 | 02-05-2024 |
| | | US 20260058310 A1 | 26-02-2026 |
| | | WO 2022240227 A1 | 17-11-2022 |
| KR 20230126985 A | 31-08-2023 | NONE | |
| US 2014186680 A1 | 03-07-2014 | CN 104521031 A | 15-04-2015 |
| | | EP 2869363 A1 | 06-05-2015 |
| | | JP 6120300 B2 | 26-04-2017 |
| | | JP 2015536030 A | 17-12-2015 |
| | | KR 20140044757 A | 15-04-2014 |
| | | TW 201436342 A | 16-09-2014 |
| | | US 2014186680 A1 | 03-07-2014 |
| | | WO 2014054919 A1 | 10-04-2014 |
| KR 20130139200 A | 20-12-2013 | NONE | |
| KR 20130092245 A | 20-08-2013 | NONE | |
| US 2018040868 A1 | 08-02-2018 | KR 20160125921 A | 01-11-2016 |
| | | US 2018040868 A1 | 08-02-2018 |
| | | WO 2016171519 A1 | 27-10-2016 |
| EP 2677590 A2 | 25-12-2013 | EP 2677590 A2 | 25-12-2013 |
| | | TW 201246663 A | 16-11-2012 |
| | | WO 2012111956 A2 | 23-08-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240163679